# EUROPEAN PATENT APPLICATION

(11) **EP 1 645 546 A1**
(43) Date of publication of application: **12.04.2006**
(21) Application number: 04746000.1
(22) Date of filing: 16.06.2004
(51) Int. Cl.: C03B 37/018

(54) **OPTICAL FIBER BASE MATERIAL AND METHOD FOR PRODUCTION THEREOF**

(30) Priority: 17.06.2003 JP 2003017223
(71) Applicant: Shin-Etsu Chemical Co., Ltd., Chiyoda-ku, Tokyo 100-0004 (JP)
(72) Inventor: SHIMADA, Tadakatsu, c/o Shin-Etsu Chemical Co. Ltd, Annaka-shi, Gunma 3790195 (JP)
(74) Representative: Pfenning, Meinig & Partner GbR
(86) International application number: PCT/JP2004/008459
(87) International publication number: WO 2005/005330

(57) **Abstract**

There is provided an optical fiber base material having a uniform outer diameter after sintering. Moreover, there is provided a manufacturing method of an optical fiber base material for depositing and sintering soot cladding a surface of a core rod. The method includes: using the core rod of which an outer diameter is changed in a longitudinal direction; depositing the soot on the core rod to manufacture a porous base material for optical fiber; and sintering the base material to vitrify it transparently. Preferably, the method includes: previously increasing an outer diameter of a portion having the reduced outer diameter after sintering; manufacturing a new core rod that is made by previously reducing an outer diameter of a portion having the increased outer diameter after sintering; and depositing the soot on the new core rod.

## Description

### CROSS REFERENCE TO RELATED APPLICATION

The present application is a continuation application of PCT/JP2004/008459 filed on June 16, 2004, which claims priority from a Japanese Patent application No. 2003-172223 filed on June 17, 2003, the entire contents of which are incorporated herein by reference for all purposes.

### BACKGROUND OF THE INVENTION

### Field of the Invention

The present invention relates to a quartz glass rod that is a base material of fiber for optical communication, and more particularly relates to a manufacturing method of an optical fiber base material that is made by dehydrating and sintering a soot base material formed by depositing glass fine particles on a starting member to vitrify the material transparently.

### Description of Related Art

Although fiber for optical communication is produced by pulling an optical fiber base material after heating and elongating the base material, since an airflow in a fiber-pulling machine varies with variation of an outer diameter of the optical fiber base material, this affects dimensional accuracy of the optical fiber acquired by pulling the material, thereby causing characteristic variation of the optical fiber. In addition, pulling material is to coat a protective layer such as resin on a surface of the base material while reducing the diameter of the optical fiber base material to a predetermined diameter of about 125µm. Moreover, a substandard optical fiber has a bad effect on connection between optical fibers and a connection state with optical fiber, thereby causing variation of transmission characteristic of an optical signal.

For this reason, in order to improve dimensional accuracy of an optical fiber base material before pulling the material, there is a method for adjusting an outer diameter of the optical fiber while heating and elongating the base material using a burner and an electric furnace. For example, an optical fiber base material is heated by a burner to be pulled and is measured at two points in the vicinity of the reduced diameter, and elongating speed is adjusted, in order to improve dimensional accuracy (for example, see Japanese Patent Application Publication (Laid-Open) No. 1981-9231, particularly pages 1 and 2, and Fig. 2). When using flames of a burner as a heating means, there has been a disadvantage that thermal dose is not enough and it is difficult to soften a base material to the inside of the material when the diameter of the elongated optical fiber base material is large.

Moreover, an optical fiber base material is elongated by using an electric furnace as a heating means, gripping both ends of the base material with top and bottom chucks of a glass lathe, relatively approximating one of the chucks to the heating furnace, and relatively estranging another of the chucks (for example, see Japanese Patent Application Publication (Laid-Open) No. 1987-167236, particularly pages 1 to 6, and Fig. 2). In recent years, there is a problem that a base material grows in size and a pulling process needs a grand facility, thereby raising the cost.

On the other hand, in order to manufacture an optical fiber base material as materials, a two-step method is profitable on the cost front. For example, according to a method disclosed in Japanese Patent Application Publication (Laid-Open) No. 1985-141634 (particularly pages 1 to 5), a core-soot for a first clad is produced by a flame hydrolysis method, this is dehydrated and vitrified to be a core rod, a second clad soot with a predetermined amount is deposited in an outside CVD method as necessary after elongating, and the optical fiber base material is produced by sintering and vitrifying it.

In this method, it is important that a characteristic of a base material is stabilized longitudinally. With attention to this, according to Japanese Patent Application Publication (Laid-Open) No. 1993-170474 (particularly page 1), an outside CVD method longitudinally changes a deposition amount of soot and deposits the soot according to a core-clad ratio and a specific refraction ratio difference of a core rod. There is a method changing moving velocity of a burner as a method changing the deposition amount. For example, according to Japanese Patent Application Publication (Laid-Open) No. 1998-120430 (particularly pages 1 and 2, and Figs. 1 to 3), an outer diameter of porous base material for an optical fiber during manufacturing is measured, moving velocity of a burner or a raw material amount supplied is controlled, and a base material having a constant outer diameter in an axial direction is obtained.

Moreover, since melted glass moves to a longitudinal unmelted side during sintering, its diameter may become nonuniform. In order to remove this effect, Japanese Patent Application Publication (Laid-Open) No. 2000-7369 (particularly pages 2 to 4, and Figs. 1 to 4) discloses a method for changing a deposition amount of soot longitudinally. Further, Japanese Patent Laid-Open No. 1990-212328 (particularly pages 1 to 3, and Figs. 1 to 4) and Japanese Patent Application Publication (Laid-Open) No. 2000-47039 (particularly pages 1 to 5, and Figs. 1 to 3) disclose a method for grinding a surface of base material ingot after sintering to stabilize a longitudinal characteristic. In this manner, a method for stabilizing a characteristic in a longitudinal direction of a base material is performed in various ways in each manufacturing process.

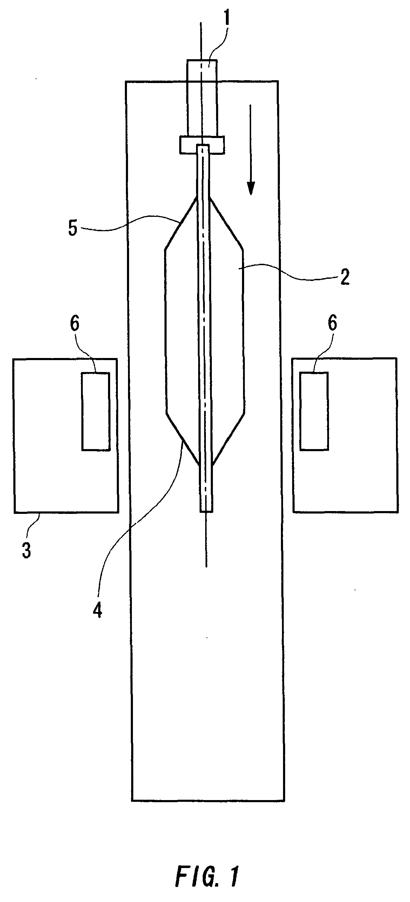

Next, an example of a method for sintering a porous base material for optical fibers formed by depositing glass fine particles to transparently vitrify the sintered material will be described with reference to Fig. 1. In Fig. 1, a porous base material 2 is attached to a supporting section 1 liftably and rotatably. By moving the porous base material 2 in the direction of an arrow in a sintering furnace 3, the porous base material is heated by a heating section 6 to be raised to 1500 to 1600°C and is vitrified transparently to be base material ingot for optical fibers sequentially, from an end 4 toward an end 5 thereof.

By the way, during sintering and transparently vitrifying base material, an outer diameter of a porous base material may not be constant by shrinking or elongating the base material. Therefore, although the outer diameter has been adjusted before pulling the optical fiber base material, this has caused the problem of cost-up as described above.

### SUMMARY OF THE INVENTION

Therefore, it is an object of the present invention to provide a manufacturing method of an optical fiber base material capable of lowering a manufacturing cost by having a longitudinally uniform outer diameter and thus not requiring a conventionally indispensable outer diameter adjusting process after sintering, even if the outer diameter of the porous base material is large.

To solve this object, according to the first aspect of the present invention, there is provided a manufacturing method of an optical fiber base material for depositing and sintering soot cladding a surface of a core rod. The manufacturing method includes: using the core rod of which an outer diameter is changed in a longitudinal direction; depositing the soot on the core rod to manufacture a porous base material for optical fiber; and sintering the base material to vitrify it transparently.

The manufacturing method may further include: longitudinally measuring a elongating amount of the outer diameter of the porous base material for optical fiber in sintering; previously increasing an outer diameter of a portion having the reduced outer diameter after sintering; manufacturing a new core rod that is made by previously reducing an outer diameter of a portion having the increased outer diameter after sintering; and depositing the soot on the new core rod.

The manufacturing method may further include: obtaining a ratio of the elongating amount of each of the measured portions to a elongating amount at a reference position; and using the new core rod of which an outer diameter is longitudinally changed into an outer diameter made by multiplying the outer diameter by an inverse number of the ratio.

The manufacturing method may further include: longitudinally measuring a elongating amount of the outer diameter of the optical fiber base material that is transparently vitrified using the new core rod; manufacturing a core rod of which an outer diameter is further corrected based on the measurement; and depositing a clad on the manufactured core rod.

The manufacturing method may further include changing a manufacturing condition so that a ratio of a diameter of the core rod to a thickness of an outside sedimentary layer is constant in a longitudinal direction.

In the manufacturing method, the manufacturing condition to be changed may be a raw material amount supplied and moving velocity of a burner.

The manufacturing method may further include cylindrically grinding a surface of the optical fiber base material after sintering.

According to the second aspect of the present invention, there is provided an optical fiber base material that is manufactured by a method for depositing soot on a surface of a core rod to manufacture a porous base material for optical fiber and sintering the porous base material to manufacture the optical fiber base material, in which the optical fiber base material is manufactured by means of the core rod of which an outer diameter is longitudinally changed by adding a predetermined elongating amount during sintering.

In the optical fiber base material, a elongating amount of an outer diameter of the porous base material for optical fiber during sintering may be measured in longitudinal direction, the outer diameter of the core rod at a portion having the reduced diameter after sintering may be previously increased, and the outer diameter of the core rod at a portion having the increased diameter after sintering may be previously reduced.

In the optical fiber base material, after obtaining a ratio of the elongating amount of each of the measured portions to a elongating amount at a reference position, the core rod may have a longitudinal outer diameter changed into an outer diameter made by multiplying the outer diameter by an inverse number of the ratio.

In the optical fiber base material, the optical fiber base material may be manufactured so that a ratio of the diameter of the core rod to the thickness of an outside sedimentary layer is constant in a longitudinal direction.

In the optical fiber base material, the optical fiber base material may be manufactured by cylindrically grinding a surface of the optical fiber base material after sintering.

According to the third aspect of the present invention, there is provided a core rod for an optical fiber base material depositing thereon soot cladding a surface of the core rod, in which a elongating amount of an outer diameter of the optical fiber base material during sintering is measured in longitudinal direction, the outer diameter at a portion having the reduced diameter after sintering is previously increased, and the outer diameter at a portion having the increased diameter after sintering is previously reduced.

The summary of the invention does not necessarily describe all necessary features of the present invention. The present invention may also be a subcombination of the features described above.

According to the present invention, it is possible to obtain homogenization of an outer diameter of an optical fiber base material after sintering and arbitrary outer diameter distribution. Furthermore, in order to improve a longitudinal characteristic, it is possible to adjust an outer diameter of an optical fiber base material after sintering by means of a cylindrical grinding machine and to pull the optical fiber base material after sintering without a manufacturing process adjusting the outer diameter. As a result, when the outer diameter of the optical fiber base material becomes large particularly, since the outer diameter adjusting process requiring fee can be omitted, it is possible to lower a manufacturing cost.

### BRIEF DESCRIPTION OF THE DRAWINGS

Fig. 1 is a schematic cross-sectional view exemplary showing a method for sintering and transparently vitrifying a porous base material.

Fig. 2 is a schematic cross-sectional view explaining a manufacturing method of a porous base material.

Fig. 3 is a schematic cross-sectional view showing a change of an outer diameter of an optical fiber base material after sintering.

Fig. 4 is a graph showing distribution of longitudinal relative outer diameters, which are obtained from a change of a elongating amount of the outer diameter of a porous base material before and after sintering.

Fig. 5 is a schematic cross-sectional view of a core rod that is made by a change of an outer diameter.

Fig. 6 is a schematic cross-sectional view of a porous base material that is formed by depositing soot on the core rod shown in Fig. 5.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

The present inventor noticed that an outer diameter of a porous base material is changed by elongating the porous base material during sintering in a conventional manufacturing method of an optical fiber base material. In a soot depositing step, it is possible to add a longitudinal elongating amount after sintering, which has been measured previously, in order to change the outer diameter of a core rod, and to longitudinally uniform the outer diameter of the optical fiber base material after sintering by depositing soot on the core rod.

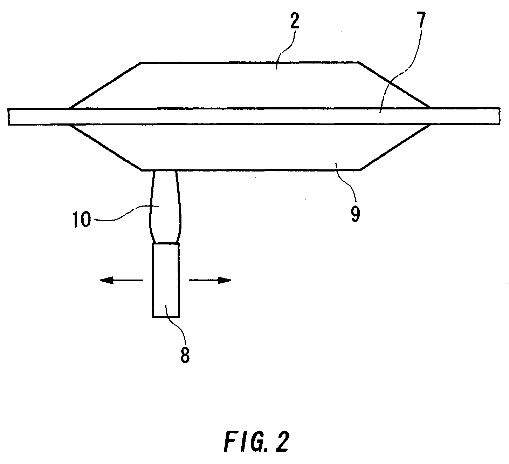

Hereinafter, it will be described in detail by means of the drawings. Fig.2 is a view explaining a manufacturing method of a porous base material 2 for optical fiber by an outside CVD method (OVD method). A core rod 7 of the porous base material 2 includes the core and clad, and is rotatably supported by a core rod supporting member, which is not illustrated, around a shaft. A burner 8 movable from side to side is provided in the lower side of the core rod 7. The burner 8 may include a plurality of burners in many cases.

The burner 8 usually uses an oxyhydrogen burner. The porous base material 2 is formed by spraying a raw material for optical fiber, e.g., steam such as SiCl₄ and reaction gas (hydrogen gas and oxygen gas) on the core rod 7 and depositing glass fine particles (soot), which is compounded by hydrolysis in oxyhydrogen flame, on the core rod 7. A non-soot deposited portions on both ends of the core rod are connected to a member such as quartz, and may be used as a gripping section in many cases.

The porous base material 2 made by such a method is sintered and vitrified transparently using a sintering furnace that performs heating in a longitudinal direction of a base material, e.g., like a sintering furnace 3 shown in Fig. 1. Generally, when performing a sintering process in such a sintering furnace, in a sintering starting side end 4, an outer diameter after sintering by deflation is relatively increased. Then, as sintering sequentially progresses from the lower side, weight of a bottom becomes larger than a heating section. Thus, since weight to the heating section increases, the base material is extended and thus its outer diameter narrows by degrees. In the vicinity of a terminating side end 5, since heating time shortens relatively, an extension amount is reduced (see Fig. 1).

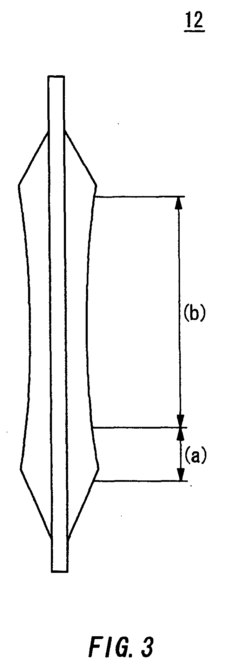

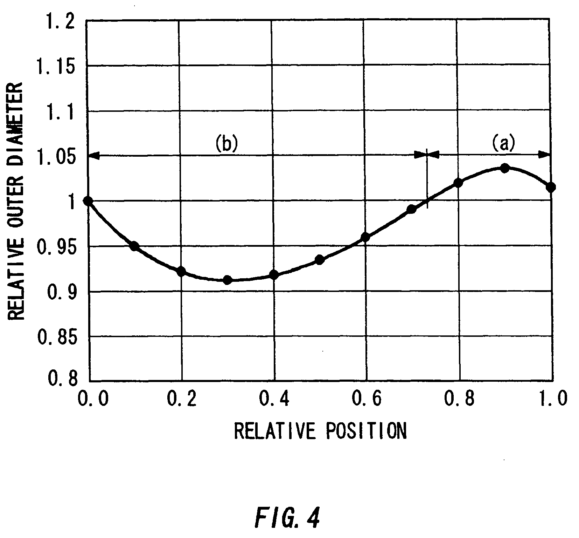

As a result, as shown in Fig. 3, a portion (a) having the thick outer diameter and a portion (b) having the thin outer diameter are formed on an optical fiber base material 12 after sintering. A change of a elongating amount of the outer diameter before and after the sintering is measured in a longitudinal direction. This measurement is performed by a preform analyzer that immerses the optical fiber base material in an oil bath and longitudinally manipulates diameter and refractive index distribution by means of a laser. Furthermore, assuming that a elongating amount of an outer diameter of a reference point (a position of a relative position zero shown in Fig. 4) is one, a ratio of a elongating amount of each section to a elongating amount of the reference point, i.e., a relative outer diameter is obtained in a longitudinal direction. This is shown in Fig. 4.

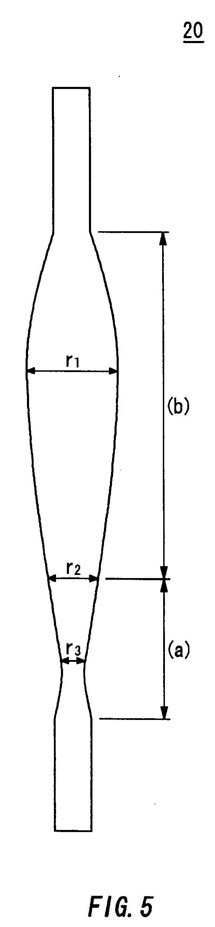

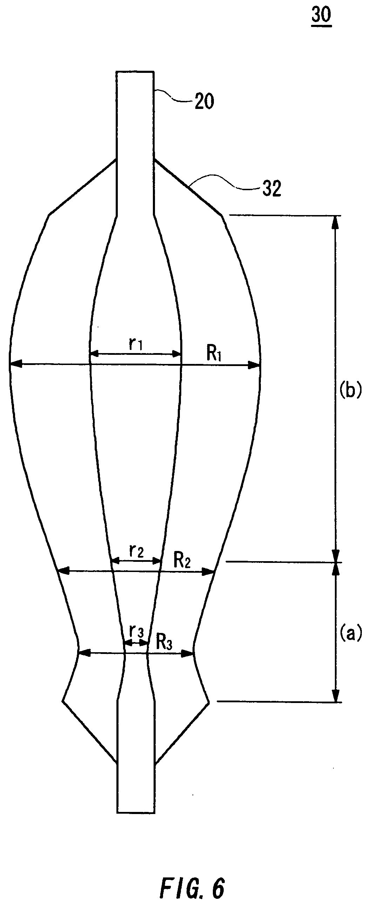

Fig. 5 is a schematic cross-sectional view of a core rod 20 that is made by a change of the outer diameter. Fig. 6 is a schematic cross-sectional view of a porous base material 30 that is formed by depositing soot 32 on the core rod 20 shown in Fig. 5. In addition, in Figs. 5 and 6, for purposes of illustration, the change of the outer diameter of the core rod 20 and the porous base material 30 is exaggeratingly pictured.

As shown in Fig. 5, the outer diameter is changed in a longitudinal direction of the core rod 20. In the core rod 20, an outer diameter at a portion having the reduced outer diameter after sintering is previously increased, and an outer diameter at a portion having the increased outer diameter after sintering is previously reduced. According to the present embodiment shown in Fig. 5, the core rod 20 is manufactured by longitudinally changing the outer diameter of the core rod 20 with a multiple of an inverse number value of a relative outer diameter first obtained, i.e., an inverse number times. In this case, the core rod 20 is manufactured by preparing an original form of core rod having a uniform outer diameter and elongating or shortening the original form by heating of the original form in an axial direction, in order to reduce or increase the outer diameter of the original form. The soot 32 is deposited on this core rod 20. In other words, on a portion where the diameter of the optical fiber base material after sintering becomes large, the soot is deposited by previously reducing the relative outer diameter of core rod, and on a portion where the diameter of the optical fiber base material becomes small, the soot is deposited by previously increasing the relative outer diameter of core rod, in order to manufacture the porous base material.

When the outer diameter of the optical fiber base material 12 after sintering when using the core rod 7 having a uniform outer diameter is an outer diameter in distribution shown in fig. 4, the outer diameter of the core rod 20 is decided by inverse number times of the outer diameter. For example, a ratio of the outer diameter of the core rod 20 at the positions where the relative outer diameters in Fig. 4 are 0.92, 1, 1.03 is r₁:r₂:r₃ = 1/0.92:1:1/1.03.

According to the present embodiment, although the core rod 20 is manufactured by longitudinally changing the outer diameter of the core rod 20 with inverse number times of a relative outer diameter first obtained and the soot 32 is deposited thereon, since the outer diameter of the porous base material obtained by such a method is not constant in a longitudinal direction, an appearance of expansion and contraction of the optical fiber base material 12 after sintering is different from when sintering and transparently vitrifying the porous base material 2 having a conventionally constant outer diameter. Therefore, when the outer diameter of the core rod 20 is longitudinally changed with inverse number times of a relative outer diameter based on the measurement data in Fig. 4 obtained by sintering the porous base material 2 having the constant outer diameter, the outer diameter may deviate from outer diameter distribution designed at first. In this case, it is preferable that the relative outer diameter is previously corrected with data changing the outer diameter of the core rod 20 to manufacture and sinter the porous base material 30.

In addition, the core rod may be manufactured while adjusting a manufacturing condition so that a ratio of the thickness of the soot 32 deposited on the core rod 20 to the outer diameter of the core rod 20 is constant in the longitudinal direction. In the deposition of the soot 32, it is preferable to change moving velocity and raw material amount supplied relative to the core rod 20 of the burner 8 in order to change a longitudinal deposition amount. For example, as shown in Fig. 6, when the ratio of the outer diameter of the core rod 20 is r₁:r₂:r₃, the soot 32 is deposited so that the ratios r₁/R₁, r₂/R₂, and r₃/R₃ of the r₁, r₂, and r₃ to the outer diameters of the soot 32 R₁, R₂, and R₃ at each position are equal to one another. In this way, although a elongating amount of an outer diameter in a sintering process varies longitudinally, since the core rod 20 having an anticipated outer diameter is used, the outer diameter of the sintered and transparently vitrified optical fiber base material is longitudinally uniform.

Since a elongating amount of the outer diameter is changed by a sintering method, an apparatus function, etc., it is preferable that the method longitudinally changing the outer diameter of the core rod 20 is determined in consideration of these matters and in view of a shape of the optical fiber base material to be obtained after sintering. In addition, although the outer diameter after sintering is longitudinally constant according the setting, the outer diameter after sintering may be longitudinally changed by the request of a puling process.

In addition, although the optical fiber base material provided by means of the manufacturing method of the present invention can be used for a pulling process as it is without an outer diameter adjusting process, it is possible to manufacture an optical fiber base material with a high accuracy by cylindrically grinding ingot after sintering to stabilize its characteristic.

Hereinafter, although it will be explained by means of examples, the present invention is not limited to these examples and enables various aspects.

### (Embodiment 1)

At first, there is previously manufactured a core rod of which an outer diameter is changed with inverse number times of the relative outer diameter obtained from a change of a elongating amount of the outer diameter before and after sintering acquired by sintering a porous base material, so that the outer diameter of the optical fiber base material after sintering is uniform in a longitudinal direction. Then, a porous base material is manufactured by depositing soot on the core rod by means of the outside CVD method described in Fig. 2. By increasing a raw material amount supplied in a portion of the core rod having the thick outer diameter and reducing the raw material amount supplied in a portion having the thin outer diameter, the deposition is performed so that a ratio of the outer diameter of the core rod to an amount of the deposited soot is constant. The size of the manufactured porous base material is an effective length of 1250mm and a diameter of 300mm.

The porous base material obtained in such a method is heated at around 1500 to 1600°C from an end of a sintering starting side to an end of a sintering terminating side by means of the sintering furnace as shown in Fig. 1, and is sintered and transparently vitrified, in order to use it as an optical fiber base material. After sintering, in reviewing a shape of the obtained optical fiber base material, the change amount of the longitudinal outer diameter was fewer than 2%. In general, since the variation of the diameter is more than 5%, the shape of the base material has been improved markedly. When pulling the obtained optical fiber base material with the diameter of 125µm, the variation of the optical fiber diameter is within 1µm and thus it was extremely stable.

### (Embodiment 2)

In reviewing the change of cutoff wavelength as a representative value of a longitudinal characteristic of the optical fiber base material provided in Embodiment 1, the change amount of 20nm occurs on the basis of a mean value of 1250nm. Further, a clad layer is thick at a portion having a thick core rod diameter, a cutoff wavelength becomes small, and an outer diameter of an optical fiber base material becomes large. Therefore, when the optical fiber base material has been cylindrically ground so that cutoff wavelength is constant, the variation width of the cutoff wavelength has been improved within 12nm and also the variation width of the outer diameter has been improved within 1%. When the optical fiber base material has been pulled with the diameter of 125µm, the variation of the optical fiber diameter is within 1µm and the variation of cutoff wavelength is within 15nm, and thus it was extremely stable.

### (Comparative Example 1)

By the outside CVD method as shown in Fig. 2, the soot is deposited on the core rod of which the outer diameter is constantly formed in a longitudinal direction in order to form the porous base material 2. The obtained porous base material is heated at around 1500 to 1600°C from an end of a sintering starting side to an end of a sintering terminating side by means of the sintering furnace as shown in Fig. 1, and is sintered and transparently vitrified, in order to use it as an optical fiber base material. After sintering, in reviewing a shape of the obtained optical fiber base material, the change amount of the longitudinal outer diameter was 12%. When pulling the optical fiber base material with the diameter of 125µm, a clearance between the optical fiber base material and a seal portion is increased by the variation of the outer diameter during pulling, and thus the pulling can be performed due to stability.

In addition, in Embodiment 1, although the change of deposition amount of the soot in the longitudinal direction has been performed by the change of a raw material amount supplied, a similar effect may also be provided by the change of moving velocity of the burner. Although the deposition of the soot is performed while adjusting a deposition condition so that a ratio of the outer diameter of the core rod to the deposition amount is constant in the longitudinal direction, the adjustment is performed by adding the variation of a characteristic of the core rod so that the characteristic of the optical fiber base material after sintering is stable when the characteristic of the core rod varies in the longitudinal direction. In Embodiment 2, although the adjustment has been performed by cylindrical grinding so as to stabilize a longitudinal characteristic, the grinding may be performed so that the outer diameter of the optical fiber base material is constant.

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

## Claims

1. A method of manufacturing an optical fiber base material for depositing and sintering soot cladding a surface of a core rod, comprising:
using the core rod of which an outer diameter is changed in a longitudinal direction;
depositing the soot on the core rod to manufacture a porous base material for optical fiber; and
sintering the base material to vitrify it transparently.

2. The manufacturing method of an optical fiber base material as claimed in claim 1, further comprising:
longitudinally measuring a elongating amount of the outer diameter of the porous base material for optical fiber in sintering;
previously increasing an outer diameter of a portion having the reduced outer diameter after sintering;
manufacturing a new core rod that is made by previously reducing an outer diameter of a portion having the increased outer diameter after sintering; and
depositing the soot on the new core rod.

3. The manufacturing method of an optical fiber base material as claimed in claim 1, further comprising:
obtaining a ratio of the elongating amount of each of the measured portions to a elongating amount at a reference position; and
using the new core rod of which an outer diameter is longitudinally changed into an outer diameter made by multiplying the outer diameter by an inverse number of the ratio.

4. The manufacturing method of an optical fiber base material as claimed in claim 1, further comprising:
longitudinally measuring a elongating amount of the outer diameter of the optical fiber base material that is transparently vitrified using the new core rod;
manufacturing a core rod of which an outer diameter is further corrected based on the measurement; and
depositing a clad on the manufactured core rod.

5. The manufacturing method of an optical fiber base material as claimed in claim 1, further comprising
changing a manufacturing condition so that a ratio of a diameter of the core rod to a thickness of an outside sedimentary layer is constant in a longitudinal direction.

6. The manufacturing method of an optical fiber base material as claimed in claim 5, wherein the manufacturing condition to be changed is a raw material amount supplied and moving velocity of a burner.

7. The manufacturing method of an optical fiber base material as claimed in claim 1, further comprising cylindrically grinding a surface of the optical fiber base material after sintering.

8. An optical fiber base material that is manufactured by a method for depositing soot on a surface of a core rod to manufacture a porous base material for optical fiber and sintering the porous base material to manufacture the optical fiber base material, wherein the optical fiber base material is manufactured by means of the core rod of which an outer diameter is longitudinally changed by adding a predetermined elongating amount during sintering.

9. The optical fiber base material as claimed in claim 8, wherein a elongating amount of an outer diameter of the porous base material for optical fiber during sintering is measured in longitudinal direction, the outer diameter of the core rod at a portion having the reduced diameter after sintering is previously increased, and the outer diameter of the core rod at a portion having the increased diameter after sintering is previously reduced.

10. The optical fiber base material as claimed in claim 9, wherein after obtaining a ratio of the elongating amount of each of the measured portions to a elongating amount at a reference position, the core rod has a longitudinal outer diameter changed into an outer diameter made by multiplying the outer diameter by an inverse number of the ratio.

11. The optical fiber base material as claimed in claim 10, wherein the optical fiber base material is manufactured so that a ratio of the diameter of the core rod to the thickness of an outside sedimentary layer is constant in a longitudinal direction.

12. The optical fiber base material as claimed in claim 8, wherein the optical fiber base material is manufactured by cylindrically grinding a surface of the optical fiber base material after sintering.

13. A core rod for an optical fiber base material depositing thereon soot cladding a surface of the core rod, wherein a elongating amount of an outer diameter of the optical fiber base material during sintering is measured in longitudinal direction, the outer diameter at a portion having the reduced diameter after sintering is previously increased, and the outer diameter at a portion having the increased diameter after sintering is previously reduced.
